(19) Europäisches Patentamt
European Patent Office
Office européen des brevets

(11) EP 1 211 298 A2

(12) **EUROPEAN PATENT APPLICATION**

(43) Date of publication:
**05.06.2002 Bulletin 2002/23**

(51) Int Cl.[7]: **C09J 7/02**, C09J 133/08, G02B 5/30

(21) Application number: **01128426.2**

(22) Date of filing: **04.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.12.2000 JP 2000368144**

(71) Applicant: **NITTO DENKO CORPORATION**
**Osaka (JP)**

(72) Inventor: **Kishioka, Hiroaki**
**Ibaraki-shi, Osaka (JP)**

(74) Representative: **Grünecker, Kinkeldey, Stockmair & Schwanhäusser Anwaltssozietät**
**Maximilianstrasse 58**
**80538 München (DE)**

(54) **Pressure-sensitive adhesive composition, pressure-sensitive adhesive sheet, and optical film**

(57) A pressure-sensitive adhesive composition which comprises as a main component an acrylic polymer comprising as a monomer unit an aromatic ring-containing copolymerizable monomer, wherein the refractive index of the composition after drying, after curing or after drying and curing is 1.49 or more and 1.60 or less; a pressure-sensitive adhesive sheet used to stick and fix an optical film on the display panel of a display device, wherein a pressure-sensitive adhesive layer comprising the pressure-sensitive adhesive composition is formed on a release liner; and an optical film which comprises an optical film used to stick and fix on the display panel of a display device having formed on one face thereof the pressure-sensitive adhesive layer comprising the pressure-sensitive adhesive composition are described.

*FIG. 1*

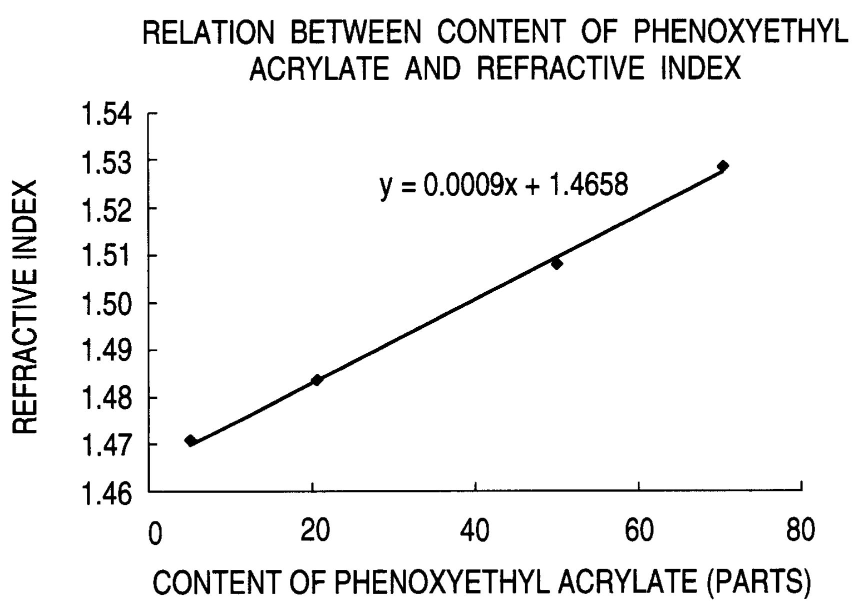


EP 1 211 298 A2

## Description

### FIELD OF THE INVENTION

The present invention relates to a pressure-sensitive adhesive composition and a pressure-sensitive adhesive sheet used to stick and fix the optical film on the display panel of a liquid crystal display device and the like, and an optical film.

### BACKGROUND OF THE INVENTION

Adhesive compositions containing acrylic polymers have hitherto been used as pressure-sensitive adhesive compositions used to laminate various optical films such as antireflection films and electrically conductive films (ITO films) to the display panels of liquid crystal display devices. The display panels on which these optical films are stuck are widely used for mobile communication terminals (mobile-type telephone terminals of portable telephones and PHS phones and PDA terminals).

In recent years, lightening in weight and thinning of apparatus have been demanded principally in the field of the mobile communication terminals. Considerable attention is focused on film light-guiding sheets as optical films for the purpose of such lightening and thinning. The "film light-guiding sheets," which are used for liquid crystal display devices, are the optical films that have a function of allowing outgoing of light transmitted in the lateral direction to the upside or the downside inside the liquid crystal panels and that are able to carry out lighting with ease when luminous sources are arranged on the sides of the liquid crystal display devices. The film light-guiding sheets are thought effective in lightening and thinning of apparatus because the sheets are thin as compared with conventional light-guiding sheets.

High-degree characteristics such as effective employment of light or control or reduction in the consumption of electric power energy have been demanded. For example, the display panels of liquid crystal display devices have structure where a plurality of optical members such as glass bases, polarizing films, and retardation films are laminated together with liquid crystal. Furthermore, the optical films also are stuck on the optical members constituting these display panels when used, and accordingly prevention of total reflection is expected at the respective interfaces of any two of optical film, pressure-sensitive adhesive layer and optical member in view of effective employment of light.

For example, the refractive indexes of materials for use in the optical films and the optical members in general are about 1.52 in glass, about 1.51 in methacrylic resin, and 1.54 in polycarbonate. In the other hand, the refractive indexes of conventional pressure-sensitive adhesive compositions are about 1.47 after drying, after curing or after drying and curing, and fail to reach values as high as 1.49 or more. Therefore, the difference in refractive index is produced at the interface of optical film and pressure-sensitive adhesive layer or the interface of pressure-sensitive adhesive layer and optical member to cause the total reflection at a shallow angle, which introduces a problem of inhibiting the effective employment of light.

### SUMMARY OF THE INVENTION

An object of the invention is to provide pressure-sensitive adhesive compositions that can reduce the total reflection of light at the respective interfaces of any two of optical film, pressure-sensitive adhesive layer and optical member when the various optical films are stuck on various optical members constituting display devices by use of the pressure-sensitive adhesives, and pressure-sensitive adhesive sheets which comprises pressure-sensitive adhesive layers comprising the pressure-sensitive adhesive compositions.

Another object of the invention is to provide pressure-sensitive adhesive compositions whose refractive indexes after drying, after curing or after drying and curing are as high as those of the optical films and the optical members, and pressure-sensitive adhesive sheets which comprises pressure-sensitive adhesive layers comprising the pressure-sensitive adhesive compositions.

Furthermore, the other object of the invention is to provide optical films that can reduce the total reflection at the respective interfaces of any two of optical film, pressure-sensitive adhesive layer and optical member to achieve the effective employment of light.

The present inventor has intensively studied to achieve the above objects and as a result, found that use of a particular monomer component as a monomer unit for the pressure-sensitive adhesive compositions makes it possible to acquire high refractive indexes after drying, after curing or after drying and curing to obtain pressure-sensitive adhesive compositions having refractive indexes close to those of the optical films and optical members, thus accomplishing the invention.

That is, the invention provides a pressure-sensitive adhesive composition which comprises as a main component an acrylic polymer comprising as a monomer unit an aromatic ring-containing copolymerizable monomer, wherein the refractive index of the composition after drying, after curing or after drying and curing is 1.49 or more and 1.60

or less. Furthermore, it is preferable in the invention that the aromatic ring-containing copolymerizable monomer is at least one of an aromatic ring-containing acrylic monomer and a styrene-series monomer.

In the invention, the aromatic ring-containing acrylic monomer is preferably an aromatic ring-containing alkyl (meth)acrylate represented by the following formula (1):

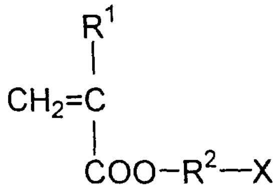

(1)

wherein $R^1$ represents a hydrogen atom or a methyl group; $R^2$ represents an alkylene group or $-R^3-(OR^3)_n-$ where $R^3$ represents an alkylene group, and n represents a positive integer; and X represents an aryl group or an aryloxy group.

The invention also provides a pressure-sensitive adhesive sheet used to stick and fix an optical film on the display panel of a display device, wherein a pressure-sensitive adhesive layer comprising the aforesaid pressure-sensitive adhesive composition is formed on a release liner. Moreover, the invention provides an optical film which comprises an optical film used to stick and fix on the display panel of a display device having formed on one side thereof a pressure-sensitive adhesive layer comprising the aforesaid pressure-sensitive adhesive composition.

## BRIEF DESCRIPTION OF THE DRAWINGS

Fig. 1 is a graph showing the relation between the content of phenoxyethyl acrylate of a monomer component and the refractive index of a pressure-sensitive adhesive composition after drying, after curing or after drying and curing.
Fig. 2 is a schematic sectional view showing a pressure-sensitive adhesive sheet of the invention.
Fig. 3 is a schematic sectional view showing an optical film of the invention.
Fig. 4 is a schematic sectional view showing a condition where an optical film of the invention is stuck on a liquid crystal panel using a glass base.
Fig. 5 is a schematic view showing a condition where a pressure-sensitive adhesive sheet is stuck in the method for evaluating a total reflection angle and an intensity ratio of outgoing light.

Description of the Reference Numerals

1: Pressure-Sensitive Adhesive Sheet
2: Release Liner
3: Pressure-Sensitive Adhesive Layer
4: Optical Film comprising Pressure-Sensitive Adhesive Layer
5: Optical Film
6: Pressure-Sensitive Adhesive Layer
7: Liquid Crystal Panel

## DETAILED DESCRIPTION OF THE INVENTION

In the pressure-sensitive adhesive compositions of the invention, the aromatic ring-containing copolymerizable monomers used as monomers are not particularly limited as long as the monomers are copolymerizable monomers containing aromatic rings in molecules. For example, aromatic ring-containing ethylenic unsaturated monomers are preferably used as the aromatic ring-containing copolymerizable monomers. The aromatic ring-containing copolymerizable monomers can be used singly or as mixtures of two or more thereof.

Concrete examples of the aromatic ring-containing copolymerizable monomers include aromatic ring-containing acrylic monomers and styrene-series monomers.

The aromatic ring-containing acrylic monomers are not particularly limited as long as the monomers are acrylic monomers containing aromatic rings in molecules. Preferred aromatic ring-containing acrylic monomers are aromatic

ring-containing (meth)acrylates, examples of which include aromatic ring-containing alkyl (meth)acrylates and aryl (meth)acrylates (phenyl (meth)acrylates, and the like). Of aromatic ring-containing (meth)acrylates, aromatic ring-containing alkyl (meth)acrylates are particularly preferred. The term "(meth)acrylate" as used herein refers to both an acrylate and a methacrylate. The term "(meth)acrylic acid" as used herein refers to both an acrylic acid and a methacrylic acid.

Of the aromatic ring-containing alkyl (meth)acrylates, compounds represented by the following formula (1) are preferred.

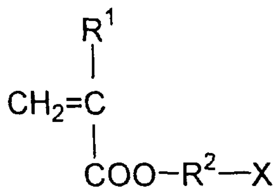

(1)

wherein $R^1$ represents a hydrogen atom or a methyl group; $R^2$ represents an alkylene group or $-R^3-(OR^3)_n-$, where $R^3$ represents an alkylene group, and n represents a positive integer; and X represents an aryl group or an aryloxy group.

Examples of the alkylene group represented by $R^2$ include alkylene groups having from one to 18 carbon atoms (for example, methylene, ethylene, propylene, isopropylene, and butylene). Preferred alkylene groups include those having one to four carbon atoms, and particularly a methylene group and an ethylene group are most suitable.

The alkylene groups represented by $R^3$ are those having from one to six carbon atoms (for example, methylene, ethylene, trimethylene, methylethylene, and tetramethylene). Preferred alkylene groups include those having from one to four carbon atoms, and particularly a methylene group and an ethylene group are most suitable.

n is a positive integer, for example, an integer of from one to 10. Preferred n is an integer of from one to six.

The aryl groups represented by X include a phenyl group, a naphthyl group and the like. The aryloxy groups include a phenyloxy group, a naphthyloxy group and the like. The aryl groups and the aryloxy groups represented by X may contain substituent groups. The substituent groups are not particularly limited, and examples thereof include alkyl groups, alkoxy groups, a hydroxy group, a carboxyl group, an amino group, a nitro group, a cyano group, halogen atoms, and a sulfo group. Preferred substituent groups on the aryl groups and the aryloxy groups represented by X are alkyl groups and alkoxy groups. These substituent groups can be used singly or as mixtures of two or more thereof.

Examples of the aromatic ring-containing alkyl (meth)acrylates represented by formula (1) include aryl-$C_{1-18}$-alkyl (meth) acrylate, aryloxy-$C_{1-18}$-alkyl (meth)acrylate, and aryloxy-poly-$C_{1-6}$-alkylene glycol (meth)acrylate. More concrete examples of the aromatic ring-containing alkyl (meth)acrylates include benzyl (meth)acrylate, phenoxyethyl (meth)acrylate, phenoxydiethylene glycol (meth)acrylate, ethylene oxide-modified cresol (meth)acrylate, and ethylene oxide-modified nonylphenol (meth)acrylate.

The aromatic ring-containing acrylic monomers can be used singly or as mixture of two or more thereof.

Examples of the styrene-series monomers as the aromatic ring-containing copolymerizable monomers include styrene, vinyltoluene, $\alpha$-methylstyrene and the like. Of the styrene-series monomers, styrene is most suitable. The styrene-series monomers can be used singly or as mixtures of two or more thereof.

Only the aromatic ring-containing copolymerizable monomers comprising at least one of the aromatic ring-containing acrylic monomers and the styrene-series monomers may be used as monomers in the acrylic polymers contained as the main components in the pressure-sensitive adhesive compositions of the invention. However, the aromatic ring-containing copolymerizable monomers (the aromatic ring-containing acrylic monomers, the styrene-series monomers, etc.) can be used jointly with other monomers copolymerizable with the aromatic ring-containing copolymerizable monomers. Copolymerizable monomers containing no aromatic ring (ethylenic unsaturated monomers containing no aromatic ring) can be used as the aforesaid copolymerizable monomers. The copolymerizable monomers containing no aromatic ring can be used singly or as mixture of two or more thereof.

Although the aforesaid copolymerizable monomers containing no aromatic ring are particularly limited, alkyl (meth)acrylates containing no aromatic ring where the alkyl group has from one to 18 carbon atoms are suitable. Concretely, the copolymerizable monomers containing no aromatic ring are alkyl (meth)acrylates such as methyl (meth) acrylate, ethyl (meth)acrylate, propyl (meth)acrylate, isopropyl (meth)acrylate, butyl (meth)acrylate, isobutyl (meth) acrylate, 2-ethylhexyl (meth)acrylate, octyl (meth)acrylate, nonyl (meth)acrylate, isononyl (meth)acrylate, decyl (meth) acrylate, and dodecyl (meth)acrylate. These alkyl (meth)acrylates can be used singly or as mixtures of two or more thereof.

Furthermore, any of various monomers known as monomers for modification of the acrylic pressure-sensitive

adhesives can be used. The monomers for modification also can be used as the copolymerizable monomers containing no aromatic ring. Examples of these monomers for modification include vinyl esters such as vinyl acetate; (meth) acrylonitrile; amido group-containing copolymerizable monomers such as (meth)acrylamide; hydroxyl group-containing copolymerizable monomers such as 2-hydroxyethyl (meth)acrylate, 3-hydroxypropyl (meth)acrylate, 4-hydroxybutyl (meth)acrylate, and 6-hydroxyhexyl (meth)acrylate; epoxy group-containing copolymerizable monomers such as glycidyl (meth)acrylate; amino group-containing copolymerizable monomers such as N,N-dimethylaminoethyl (meth)acrylate; and carboxyl group-containing copolymerizable monomers such as (meth)acrylic acid, crotonic acid, itaconic acid, maleic acid, and fumaric acid. These monomers for the modification can be used singly or as mixtures of two or more thereof.

The hydroxyl group-containing copolymerizable monomers and the carboxyl group-containing copolymerizable monomers are suitably used as the monomers for the modification. Of the carboxyl group-containing copolymerizable monomers, acrylic acid is particularly suitable.

Polar group-containing copolymerizable monomers such as the carboxyl group-containing copolymerizable monomers are important components to produce crosslinked bonds in acrylic polymers.

The pressure-sensitive adhesive compositions of the invention comprise as main components acrylic polymers containing as monomer units the aforesaid monomer components (the aromatic ring-containing copolymerizable monomers, the copolymerizable monomers containing no aromatic ring, the monomers for modification, etc.), that is, acrylic polymers prepared by polymerizing the aforesaid monomer components. Processes of polymerization adopted herein include solution polymerization carried out in the presence of a polymerization initiator such as azo compounds or peroxides, emulsion polymerization, mass polymerization, and polymerization carried out by irradiation with light or a radiation in the presence of a photoinitiator.

In the invention, the process where polymerization is carried out in the presence of the polymerization initiator that produces radicals by cleavage (radical polymerization process) can be suitably adopted. In such radical polymerization, polymerization initiators usable for usual radical polymerization are usable. Examples of the polymerization initiators include peroxides such as dibenzoyl peroxide and tert-butyl permaleate and azo-series compounds such as 2,2'-azobisisobutyronitrile and azobisisovaleronitirile.

In the radical polymerization, the amount of the polymerization initiators is an amount usually used in the polymerization of acrylic monomers. For example, the amount of the polymerization initiators is from about 0.005 to about 10 parts by weight and preferably from about 0.1 to about 5 parts by weight to 100 parts by weight of the total amount of the aforesaid monomers.

In the invention, the acrylic polymers prepared by the polymerization of the aforesaid monomer components (the aromatic ring-containing copolymerizable monomers, the copolymerizable monomers containing no aromatic ring, the monomers for modification, etc.) can be dried as such and used. Or the polymers can be cured by crosslinking process and used. Crosslinking of the polymers enables greater cohesion as the pressure-sensitive adhesives.

Crosslinking agents can be used for the curing by crosslinking. That is, the pressure-sensitive adhesive compositions of the invention can be blended with the crosslinking agents. Herein, heating crosslinking process is preferably carried out for the crosslinking of the polymers.

The aforesaid crosslinking agents widely include known ones and are particularly preferably polyfunctional melamine compounds, polyfunctional epoxy compounds, and polyfunctional isocyanate compounds. The crosslinking agents can be used singly or as mixtures of two or more thereof.

Examples of the polyfunctional melamine compounds include methylated trimethylolmelamine and butylated hexamethylolmelamine. Examples of the polyfunctional epoxy compounds include diglycidylaniline and glycerin diglycidyl ether. The amount of at least one of the polyfunctional melamine compounds and the polyfunctional epoxy compounds used ranges from 0.001 to 10 parts by weight and preferably from 0.01 to 5 parts by weight to 100 parts by weight of the aforesaid polymers.

Examples of the polyfunctional isocyanate compounds include tolylenediisocyanate, hexamethylenediisocyanate, polymethylenepolyphenylisocyanate, diphenylmethanediisocyanate, a dimer of diphenylmethanediisocyanate, a reaction product of trimethylolpropane and tolylenediisocyanate, a reaction product of trimethylolpropane and hexamethylenediisocyanate, polyether polyisocyanate, and polyester polyisocyanate. The amount of the polyfunctional isocyanate compounds used ranges, for example, from 0.01 to 20 parts by weight and preferably from 0.05 to 15 parts by weight to 100 parts by weight of the aforesaid polymers.

Although the pressure-sensitive adhesive compositions of the invention themselves can be used as such, a variety of additives can be blended as needed. That is, known or conventional tackifier resins (for example, rosin-series resins, terpene-series resins, petroleum resins, coumarone-indene resins, and styrene-series resins) can be blended to adjust the adhesive characteristics of the pressure-sensitive adhesive compositions comprising as main adhesive components the aforesaid polymers (particularly the acrylic polymers). Furthermore, a variety of known additives such as plasticizers, fillers such as finely divided silica, colorants, and ultraviolet absorbers also can be blended as additives other than the tackifier resins. The amount of these additives used is an amount usually applied to acrylic pressure-sensitive adhesives.

As described above, the pressure-sensitive adhesive compositions of the invention comprise as main components the acrylic polymers comprising as the monomer units the aromatic ring-containing copolymerizable monomers. The pressure-sensitive adhesive compositions are dried or the polymers are crosslinked as needed by use of the crosslinking agents to use the compositions as pressure-sensitive adhesives. It is important that the refractive index of the pressure-sensitive adhesive compositions after drying, after curing or after drying and curing is 1.49 or more. The refractive index of the materials used for the optical films such as film light-guiding sheets or the optical members such as glass bases ranges from about 1.51 to about 1.54 as described above. When the refractive index of the pressure-sensitive adhesive compositions after drying, after curing or after drying and curing is less than 1.49, the difference in the refractive index between the compositions and the optical films or the optical members increases. Therefore, for example, when a layer comprising a pressure-sensitive adhesive composition is provided on a film light-guiding sheet that is a kind of optical film, total reflection can take place in a shallow angle in some time, leading to reduction in the effective employment of light. Furthermore, in order to reduce the difference in the refractive index between the compositions and the optical films or the optical members, it also is important that the refractive index of the pressure-sensitive adhesive compositions of the invention after drying, after curing or after drying and curing is 1.60 or less.

Accordingly, it is desirable that the refractive index of the pressure-sensitive adhesive compositions of the invention after drying, after curing or after drying and curing ranges from 1.49 to 1.60. In particular, it is most suitable that the refractive index ranges from 1.50 to 1.55.

In the invention, the refractive index of the pressure-sensitive adhesive compositions after drying, after curing or after drying and curing can be adjusted depending upon the kind and the proportion of the aromatic ring-containing copolymerizable monomers blended (the aromatic ring-containing acrylic monomers, the styrene-series monomers, etc.) The refractive index tends to increase with increase in the proportion of the aromatic ring-containing copolymerizable monomers blended.

Fig. 1 is a graph showing the relation between the content of phenoxyethyl acrylate of a monomer component and the refractive index of a pressure-sensitive adhesive composition after drying, after curing or after drying and curing in an acrylic polymer where phenoxyethyl acrylate is used as the aromatic ring-containing monomer. As may be seen from Fig. 1, the refractive index increases with increase in the content of phenoxyethyl acrylate.

When the content of phenoxyethyl acrylate is x and the refractive index is y, the relation between the refractive index and the content of phenoxyethyl acrylate blended is indicated by the following formula in the range of measurements shown in Fig. 1:

$$y = 0.0009x + 1.4658$$

Herein, the measurement was carried out in the range of from five to 70 percent by weight in the content of phenoxyethyl acrylate to the total monomer components.

Butyl acrylate and 3-hydroxypropyl acrylate are herein used as other monomers than phenoxyethyl acrylate. A ratio of the monomers of these two components is butyl acrylate : 3-hydroxypropyl acrylate = 50 : 0.06 (parts by weight), when the proportion of phenoxyethyl acrylate blended is 50 percent by weight to the total monomer components. The proportion of butyl acrylate blended is increased or decreased with an increase or a decrease of the proportion of phenoxyethyl acrylate blended to the total monomer components.

Furthermore, trimethylolpropane tolylenediisocyanate is blended as a crosslinking agent. That is, the acrylic polymer is crosslinked and cured. The content of the crosslinking agent is 0.8 part by weight to 100 parts by weight of the aforesaid polymer.

The proportion of the aromatic ring-containing acrylic monomers blended is preferably 30 percent by weight or more (for example, from 30 to 100 percent by weight) and more preferably ranges from 40 to 80 percent by weight to the total amount of monomer components although the proportion thereof varies depending upon the kind of aromatic ring-containing copolymerizable monomers used. When the proportion of the aromatic ring-containing acrylic monomers blended is less than 30 percent by weight to the total amount of monomer components, the refractive index of the resulting pressure-sensitive adhesive compositions after drying, after curing or after drying and curing may decrease to values less than 1.49 in some cases.

Fig. 2 is a schematic sectional view showing a pressure-sensitive adhesive sheet of the invention. In Fig. 2, 1 is a pressure-sensitive adhesive sheet; 2 is a release liner; and 3 is a pressure-sensitive adhesive layer. Pressure-sensitive adhesive sheet 1 is a pressure-sensitive adhesive sheet without any base material where pressure-sensitive adhesive layer 3 is provided on release liner 2.

For preparation of the pressure-sensitive adhesive sheet that is a pressure-sensitive adhesive sheet without any base material, for example, the pressure-sensitive adhesive composition of the invention is coated on a release

liner comprising a base material such as a plastic film (polyethylene terephthalate film, etc.) and having a release layer, dried, and cured as needed by crosslinking. Of course, in the release liner, a surface coated with the pressure-sensitive adhesive composition is the surface of the release layer side. Moreover, in the release liner, the release layer can be provided on one side of the base material or on both sides thereof.

Coating of the pressure-sensitive adhesive compositions can be carried out, for example, by use of conventional coaters such as a gravure-roll coater, a reverse-roll coater, a kiss-roll coater, a dip-roll coater, a bar coater, a knife coater, or a spray coater.

The thickness of a pressure-sensitive adhesive layer can be appropriately set as long as the handling properties are not deteriorated, but in general ranges from about 5 to 500 μm and preferably from about 10 to 100 μm.

The pressure-sensitive adhesive layer can be constituted of a plurality of layers through another layer or through no another layer as long as the effect of the invention is not deteriorated. For example, the pressure-sensitive adhesive sheet can be a double-sided adhesive sheet where the pressure-sensitive adhesive layers comprising the pressure-sensitive adhesive composition are provided on both sides of a transparent base material.

Although plastic films are suitably used as the base material of the release liner, paper, foams, or metal foil also can be used. The thickness of the base materials is appropriately selected according to the purpose, but in general ranges from about 10 to about 500 μm.

Materials for the plastic film used as the base material of the aforesaid release liner include polyesters such as polyethylene terephthalate, polyolefins such as polypropylene and ethylene-propylene copolymers, and thermoplastic resins such as polyvinyl chloride. The plastic film can be any of a non-stretched film and a stretched (uniaxially stretched or biaxially stretched) film.

Release layers used as release layers for conventional release liners (for example, silicone-series release layers) also can be used as the release layers of the invention.

The pressure-sensitive adhesive sheet is stuck on an optical film such as a film light-guiding sheet to prepare an optical film having a pressure-sensitive adhesive layer.

The optical film having such pressure-sensitive adhesive layer is stuck and fixed on a display panel, thereby to make a display device. Of course, the surface of the optical film stuck on the display panel is the surface of the pressure-sensitive adhesive layer side. The release liner is peeled, and the surface of the pressure-sensitive adhesive layer side of the optical film is thereby exposed to stick and fix on the display panel.

The pressure-sensitive adhesive sheet of the invention is cut into appropriate width and wound in roll form, and also can be used as a pressure-sensitive adhesive tape.

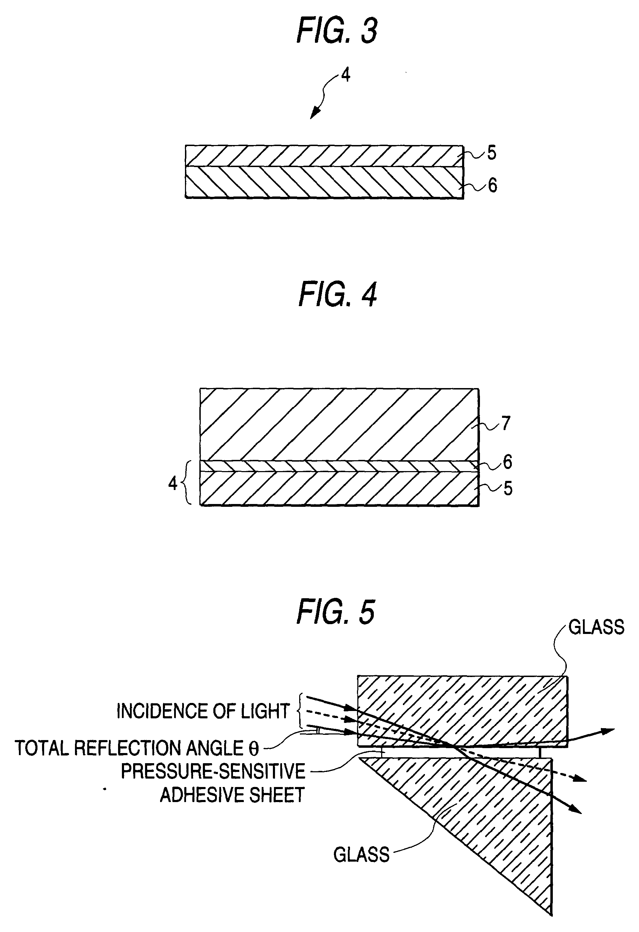

Fig. 3 is a schematic sectional view showing an optical film of the invention. In Fig. 3, 4 is an optical film having a pressure-sensitive adhesive layer; 5 is an optical film such as a film light-guiding sheet; and 6 is a pressure-sensitive adhesion layer.

In order to prepare the optical film comprising the pressure-sensitive adhesive layer formed on one side thereof, the aforesaid pressure-sensitive adhesive composition is coated on an optical film by use of a conventional coater (roll coater, reverse coater, gravure coater, bar coater, etc.), dried, and as needed thermally crosslinked or cured by ultraviolet, or further the pressure-sensitive adhesive sheet comprising the pressure-sensitive adhesive composition is stuck on an optical film. That is, transfer to the optical film by use of the pressure-sensitive adhesive sheet or direct coating onto an optical film can be carried out.

In the optical film of the invention, for example, the film light-guiding sheet is exemplified by a film where the function of guiding light is imparted by forming fine concavities and convexities on one surface of a polycarbonate film. The refractive index of film materials used for the film light-guiding sheet is 1.49 or more, preferably 1.50 or more, more preferably 1.51 or more, and most preferably 1.52 or more. The upper limit of the refractive index is preferably 1.60. The thickness of the film light-guiding sheet can be appropriately selected, for example, from the range of from about 10 to about 200 μm according to the purpose.

In addition, the optical film includes an antireflection film and an electrically conductive film. Materials forming these films are preferably those having the aforesaid refractive indexes.

In the invention, the optical film can have a release liner on the pressure-sensitive adhesive layer side.

The optical film of the invention can be stuck and fixed on a display panel (for example, a liquid crystal panel having structure where a plurality of optical members such as a glass base, a polarizing film, and a retardation film are laminated together with liquid crystal).

Fig. 4 is a schematic sectional view showing a condition where an optical film is stuck on a liquid crystal panel. In Fig. 4, 4 is an optical film having a pressure-sensitive adhesive layer on one surface thereof; 5 is an optical film; 6 is a pressure-sensitive adhesive layer; and 7 is a liquid crystal panel (Description of various optical members such as a glass base is omitted) . The surface of the side of pressure-sensitive adhesive layer 6 in optical film 4 is stuck and fixed on the liquid crystal panel.

In this manner, the optical film is laminated to a display panel to make a display device. In the display device as shown in Fig. 4 , a liquid crystal panel is used as the display panel. The display device where the optical film is stuck

on the liquid crystal panel (liquid crystal display device) can be used as a transmission liquid crystal display device.

Display panels used suitably are the liquid crystal panels. The liquid crystal panels used suitably are liquid crystal panels used for the display picture parts of mobile telephones (portable telephones) in mobile communication. Glass bases and plastic bases (particularly glass bases) can be used as bases for these liquid crystal panels. The refractive index of the bases is 1.49 or more, preferably 1.50 or more, more preferably 1.51 or more, and most preferably 1.52 or more, and the upper limit thereof is preferably 1.60.

The refractive indexes of the pressure-sensitive adhesive compositions of the invention after drying, after curing or after drying and curing are close to those of the optical films such as film light-guiding sheets or the optical members such as glass bases for the liquid crystal panels. Therefore, the difference of the refractive indexes is small at the interface of the pressure-sensitive adhesive layers comprising the pressure-sensitive adhesive compositions and the optical films or at the interface of the pressure-sensitive adhesive layers and the optical members, and accordingly the total reflection can be depressed to a minimum at the respective interfaces of any two of optical film, pressure-sensitive adhesive layer and optical member. Therefore, the optical films where the pressure-sensitive adhesive compositions of the invention are used can exert excellent optical performance, and furthermore the effective employment of light becomes possible.

It is a matter of course that the pressure-sensitive adhesive compositions also have excellent adhesive performance because of use of the acrylic polymers.

According to the invention, use of particular monomer components as the monomer units of the pressure-sensitive adhesive compositions leads to high refractive indexes after drying, after curing or after drying and curing thereof, which are almost equivalent to the refractive index of the optical films such as antireflection films, electrically conductive films (ITO films), and film light-guiding sheets, and the optical members such as glass bases constituting liquid crystal panels.

Therefore, the difference in the refractive index at the respective interfaces of any two of optical film, pressure-sensitive adhesive layer and optical member is reduced, and the total reflection can be depressed to a minimum. Accordingly, use of the optical films where the pressure-sensitive adhesive compositions are used enables an effective employment of light and a big saving of electricity.

The invention is more concretely illustrated below through examples. Hereinafter, parts mean parts by weight, and % means percent by weight.

## EXAMPLE 1

In a three-necked flask, 50 parts of phenoxyethyl acrylate, 49 parts of butyl acrylate, one part of acrylic acid, 0.06 part of 3-hydroxypropyl acrylate, and 45 parts of ethyl acetate as polymerization solvent were placed and stirred for 2 hours while introducing nitrogen gas. After oxygen in this polymerization system was thus purged, 0.2 part of benzoyl peroxide was added, and the mixture was heated at 60°C for 10 hours and then at 75°C for two hours. Ethyl acetate was added to the resulting reaction mixture to prepare a 25 % (solid content) acrylic polymer solution.

After 0.8 part of trimethylolpropane tolylenediisocyanate was added as a crosslinking agent to the acrylic polymer solution, a release liner made of a polyethylene terephthalate film of 38-µm thickness underwent flow casting by use of the resulting solution so as to be about 25 µm in thickness after drying, was heated and dried at 130°C for three minutes to cover the release liner, and further underwent aging at 50°C for 72 hours to prepare a pressure-sensitive adhesive sheet having a pressure-sensitive adhesive layer that forms crosslinked structure.

## EXAMPLE 2

A pressure-sensitive adhesive sheet was prepared similarly to Example 1 except that 20 parts of styrene, 25 parts of benzyl acrylate, 55 parts of isononyl acrylate, and 0.1 part of 3-hydroxypropyl acrylate were used as the monomer components.

## COMPARATIVE EXAMPLE 1

A pressure-sensitive adhesive sheet was prepared similarly to Example 1 except that 25 parts of phenoxyethyl acrylate, 74 parts of butyl acrylate, one part of acrylic acid, and 0.1 part of 3-hydroxypropyl acrylate were used as the monomer components.

About the pressure-sensitive adhesive sheets prepared in Examples 1 and 2 and Comparative Example 1, the refractive index, and the total reflection angle and the intensity ratio of outgoing light of the layers made of the pressure-sensitive adhesive compositions were measured or evaluated according to the following methods. Results of the measurement and the evaluation are shown in Table 1. According to the results, the optical performance of the pressure-sensitive adhesive compositions prepared in the examples and the comparative example is judged as follows:

A: Excellent in optical performance
B: Ordinary or not so good in optical performance A result is shown in Table 1.

Evaluation of the optical films also was carried out according to the following method.

<Method for Measuring Refractive Index>

The refractive indexes of the pressure-sensitive adhesive layers made of the pressure-sensitive adhesive compositions in the pressure-sensitive adhesive sheets (that is, the refractive indexes of the pressure-sensitive adhesive compositions after drying, after curing or after drying and curing) were measured by use of an Abbe refractometer by irradiation with sodium D ray in an atmosphere at 25°C.

<Method for Evaluating Total Reflection Angle and Intensity Ratio of Outgoing Light>

As shown in Fig. 5, a right angle prism (Material BK-7; nD 1.517) and a glass base (Material BK-7; nD 1.517) were stuck through the respective pressure-sensitive adhesive sheets obtained in the examples and the comparative example. Incidence of light from the edge of the glass base is allowed, and the angle of incidence and the presence or absence of light passing through the pressure-sensitive adhesive sheet and the prism and appearing from the prism were checked. The angle θ at which light disappears is taken as the total reflection angle (°).
Herein, the glass base was worked so that the upper surface and the lower surface thereof became parallel to each other and became vertical to the edge face (side surface), respectively. A He-Ne laser of a single mode was used as a light source and adjusted so that the polarization direction was 45° to the edge face.
Fig. 5 is a schematic view showing a form where a pressure-sensitive adhesive sheet is stuck in the evaluation method of the total reflection angle and the intensity ratio of outgoing light. The upper glass (rectangular in section) is a glass base (Material BK-7; nD 1.517), and the lower glass (triangle in section) is a right-angle prism (Material BK-7; nD 1.517). The pressure-sensitive adhesive sheet is sandwiched between these two pieces of glass.
The right-angle prism and the glass base were stuck by use of a matching oil adjusted so as to be nD 1.517 in refractive index beforehand, and the intensity of outgoing light from the right-angle prism is measured while changing the angle of incident laser beam at intervals of 5° to take the sum as the intensity of the incident beam.
On the other hand, also in the case where the right-angle prism and the glass base were stuck by use of the respective pressure-sensitive adhesive sheets prepared in the examples and the comparative example, the intensity of outgoing light was measured in a similar manner to find the sum and the ratio thereof to the intensity of the incident beam in the case where the aforesaid matching oil is used, and the ratio is taken as the intensity ratio of outgoing light. A larger intensity ratio of outgoing light is better.

Table 1

| | Example 1 | Example 2 | Comparative Example 1 |
|---|---|---|---|
| Refractive Index | 1.508 | 1.506 | 1.485 |
| Total Reflection Angle (°) | 6.3 | 6.7 | 11.8 |
| Intensity Ratio of Outgoing Light (%) | 77 | 75 | 55 |
| Evaluation | A | A | B |

As may be seen from Table 1, the pressure-sensitive adhesive compositions prepared in the examples are almost the same in the refractive index as the optical films or the optical members, small in the angle of total reflection, and large in the intensity ratio of outgoing light so that the total reflection is greatly depressed.

<Evaluation as Optical Film>

A film light-guiding sheet having uniform prisms having a incline of 43° to the film surface and a pitch of 0.25 mm beforehand was stuck on a plate made of polymethyl methacrylate (PMMA plate) of 1.2-mm thickness which was cut into a width of 40 mm and a length of 25 mm by use of the respective pressure-sensitive adhesive sheets prepared in the examples and the comparative example. A cold cathode tube was arranged in the edge face of the PMMA plate standing opposite to the incline of the film light-guiding sheet, and conditions of emission were observed from the face opposite to the face on which the film light-guiding sheet was stuck. In the pressure-sensitive adhesive sheets prepared in Examples 1 and 2, as a result, the uniformity in the face of brightness and the face brightness were satisfactory. On

the other hand, the pressure-sensitive adhesive sheet of Comparative Example 1 became darker as the sheet was more distant from the cold cathode tube, and the face brightness of the central portion also was apparently reduced. Thus the results of the pressure-sensitive adhesive sheet of Comparative Example 1 were unsatisfactory.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive composition which comprises as a main component an acrylic polymer comprising as a monomer unit an aromatic ring-containing copolymerizable monomer, wherein the refractive index of the composition after drying, after curing or after drying and curing is 1.49 or more and 1.60 or less.

2. The composition as claimed in claim 1, wherein said aromatic ring-containing copolymerizable monomer is at least one of an aromatic ring-containing acrylic monomer and a styrene-series monomer.

3. The composition as claimed in claim 2, wherein said aromatic ring-containing acrylic monomer is an aromatic ring-containing alkyl (meth)acrylate represented by the following formula (1) :

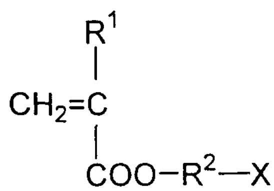

(1)

wherein $R^1$ is a hydrogen atom or a methyl group; $R^2$ is an alkylene group or $-R^3-(OR^3)_n-$, where $R^3$ is an alkylene group, and n is a positive integer; and X is an aryl group or an aryloxy group.

4. A pressure-sensitive adhesive sheet used to stick and fix an optical film on the display panel of a display device, wherein a pressure-sensitive adhesive layer comprising the pressure-sensitive adhesive composition as claimed in claim 1 is formed on a release liner.

5. A pressure-sensitive adhesive sheet used to stick and fix an optical film on the display panel of a display device, wherein a pressure-sensitive adhesive layer comprising the pressure-sensitive adhesive composition as claimed in claim 2 is formed on a release liner.

6. A pressure-sensitive adhesive sheet used to stick and fix an optical film on the display panel of a display device, wherein a pressure-sensitive adhesive layer comprising the pressure-sensitive adhesive composition as claimed in claim 3 is formed on a release liner.

7. An optical film which comprises an optical film used to stick and fix on the display panel of a display device having formed on one face thereof a pressure-sensitive adhesive layer comprising the pressure-sensitive adhesive composition as claimed in claim 1.

8. An optical film which comprises an optical film used to stick and fix on the display panel of a display device having formed on one face thereof a pressure-sensitive adhesive layer comprising the pressure-sensitive adhesive composition as claimed in claim 2.

9. An optical film which comprises an optical film used to stick and fix on the display panel of a display device having formed on one face thereof a pressure-sensitive adhesive layer comprising the pressure-sensitive adhesive composition as claimed in claim 3.

FIG. 1

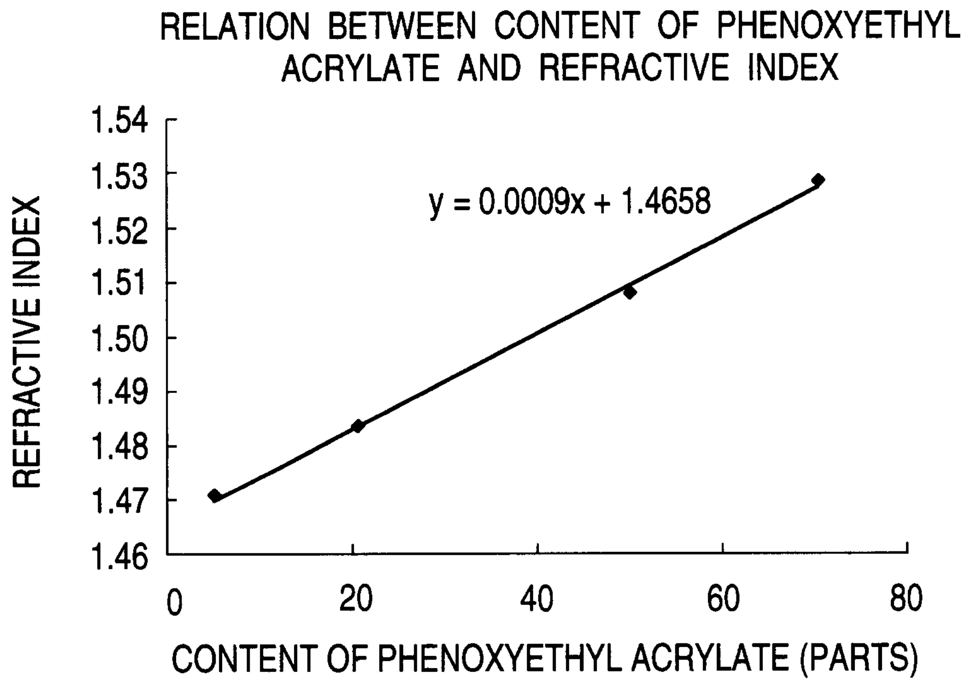
RELATION BETWEEN CONTENT OF PHENOXYETHYL ACRYLATE AND REFRACTIVE INDEX
REFRACTIVE INDEX
1.54
1.53
1.52
1.51
1.50
1.49
1.48
1.47
1.46
y = 0.0009x + 1.4658
0
20
40
60
80
CONTENT OF PHENOXYETHYL ACRYLATE (PARTS)

FIG. 2

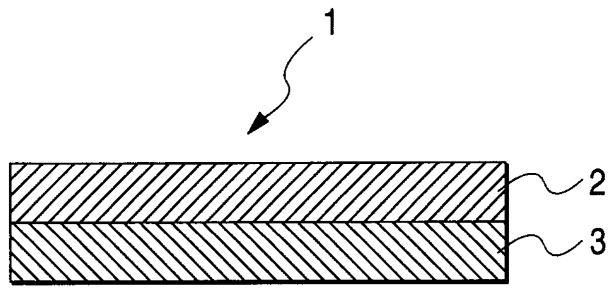
1
2
3

FIG. 3

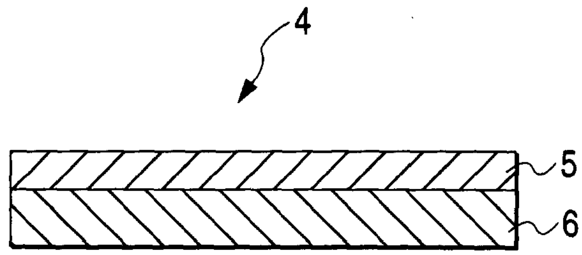


FIG. 4

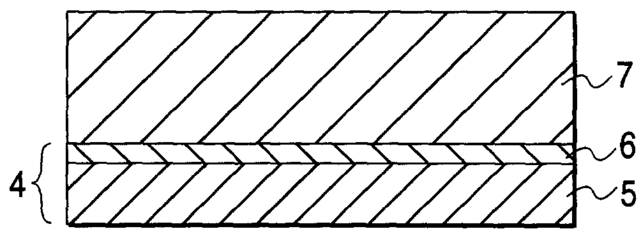


FIG. 5